# EUROPEAN PATENT SPECIFICATION

(11) **EP 0 823 540 B1**
(45) Date of publication and mention of the grant of the patent: **15.09.2004**
(21) Application number: 97304151.0
(22) Date of filing: 13.06.1997
(51) Int. Cl.: F01D 9/04, F01D 5/14, F04D 21/00

(54) **Cascade with a tandem blade lattice**
Leitgitter mit Tandemschaufeln
Anneau de guidage avec des aubes en tandem

(30) Priority: 09.08.1996 JP 22776396
(43) Date of publication of application: 11.02.1998
(73) Proprietor: KAWASAKI JUKOGYO KABUSHIKI KAISHA, Chuo-ku Kobe-shi Hyogo 650-91 (JP)
(72) Inventor: Hashimoto, Keisuke, Kobe-shi, Hyogo 651-22 (JP)
(74) Representative: Abbie, Andrew Kenneth

(56) References cited:
- EP-A- 0 560 372
- JP-A- 8 189 419
- US-A- 2 435 236
- US-A- 2 935 246
- US-A- 2 974 927
- US-A- 3 195 807
- US-A- 3 442 441
- US-A- 4 102 600
- US-A- 4 199 296
- US-A- 4 558 987
- US-A- 4 599 041
- US-A- 4 874 287
- US-A- 5 152 661

## Description

The invention relates to a fan assembly for a jet propulsion engine or gas turbine and particularly to an arrangement of tandem blades in such a fan assembly.

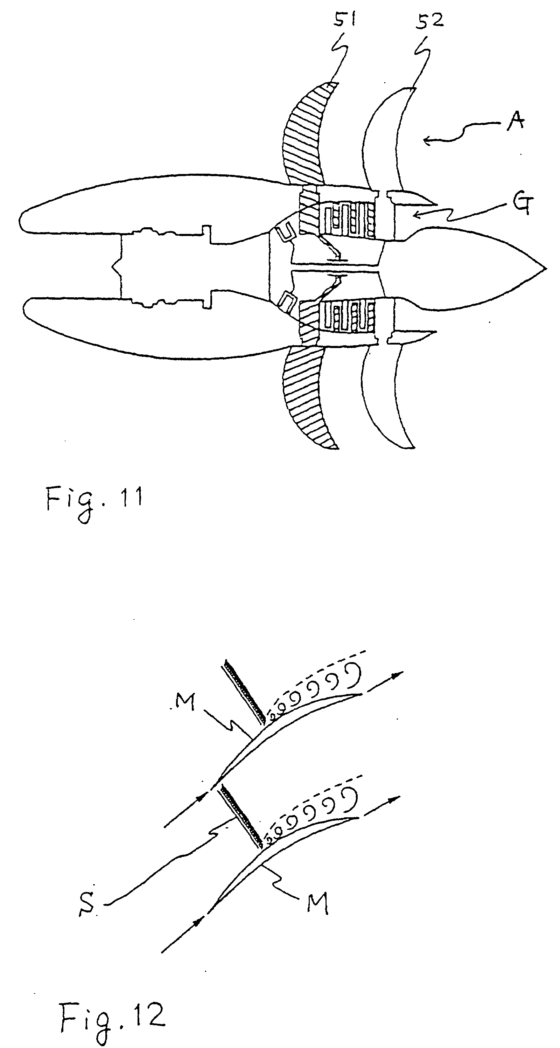

In the prior part, various proposals have been made in order to enhance the output of jet propulsion engines such as a turbojet engine, turbofan jet engine, a turboshaft engine, a ram-jet engine or an air turbo ram-jet engine and gas turbine. As an example of these proposals, an advanced turboprop engine(hereinafter referred to as an ATP) to have a bypass ratio of about 40 to 50 has been proposed (see page 16 and the like of "THE JET ENGINE" written by Rolls-Royce plc, publication of Japan Air Technical Association Co.) As shown in Fig. 11, for example, it has been planned that the ATP has a structure in which a gas flow section G is provided on a central portion side and contrarotating propeller blades 51 and 52, that is, air flow section A are provided on the outside of gas flow section G (see Gatzen.B.S & Reynolds, C.N.,;I.C.A.S Paper ICAS-84-5.6.2(1984)).

As is well known, the output of a jet propulsion engine and gas turbine can also be enhanced by increasing the engine speed. Consequently, it is desirable that the engine speed of the ATP should be increased as much as possible.

As described above, however, the ATP has the gas flow section G formed on the central portion side. For this reason, a hot section is present on the central portion side. Consequently, the engine speed is determined by the strength of the materials used against the centrifugal force acting on that portion. In other words, there is a problem that the engine speed is limited. Currently, the length of a blade such as a propeller tends to be increased, with the result that the above mentioned problem is promoted still more.

In an axial-flow compressor, if a pressure ratio in a single stage exceeds about 1.5, a shock wave S is generated between adjacent moving blades M and M provided in a moving blade line as shown in Fig. 12. In general, the shock wave S is generated from a leading edge of a lower surface (pressure surface) of the moving blade M to an intermediate portion of an upper surface (suction surface) of the adjacent moving blade M as shown. Accordingly, downstream of the shock wave S, an air flow (a boundary layer) separates from the upper surface of the blade. Therefore, performance of the compressor is lowered.

In order to solve the problems according to the prior art, the present inventor has already proposed a structure of an output section of a jet propulsion engine or a gas turbine in which a gas flow section is provided on a central portion side and an air flow section is provided on the outside of the gas flow section, characterized in that fans of the air flow section are formed into an interaction control type tandem blade lattice (Japanese Unexamined Patent Publication No. 8-189419).

However, it has become clear that a calculative compression ratio cannot be obtained by some positional relationship between front and rear blades in the tandem blade lattice according of the above-mentioned proposal.

In consideration of the problems according to the prior art, it is an object of the present invention to provide a tandem blade lattice having characteristics enhanced.

The present inventor has studied an enhancement in characteristics of the tandem blade lattice according to the above-mentioned proposal. As a result, it has been found that the above-mentioned problems can be solved by applying, to a tandem blade lattice in a super sonic region, a concept of boundary layer control to be used in order to prevent a boundary layer from separating from a blade surface of an airplane and stalling in a lower speed region.

US-A-2435236 discloses a fan assembly for a superacoustic compressor. The fan assembly comprises a disc having a plurality of blades arranged around the circumference thereof in a single row. The blades on the disc are substantially diamond-shaped in section having relatively sharp leading and trailing ends and relatively sharp apical portions disposed between the leading and trailing ends. The blades are shaped and positioned such that, in use, a shockwave. is generated along a line extending between the leading edge region of the pressure surface of each blade and the apical portion of the facing suction surface of an adjacent front portion.

The invention provides a fan assembly for an output section of a jet propulsion engine or gas turbine, said fan assembly comprising a disc and a plurality of tandem blades arranged around the circumference of the disc, each said tandem blade comprising a front blade and a rear blade and characterised in that the front blades of said tandem blades are shaped and positioned such that, in use, a shockwave is generated along a line extending between the leading edge region of the pressure surface of each front blade and the trailing edge region of the facing suction surface of an adjacent front blade and in that the front blade and rear blade of each said tandem blade are shaped and positioned such that, in use, an air flow issuing from a gap defined between the trailing edge of the front blade and the leading edge of the rear blade flows onto the suction surface of the rear blade such as to maintain a boundary layer on the suction surface of the rear blade.

Preferably, the front blade and rear blade of each tandem blade are shaped and positioned such that, in use, the speed and momentum of said air flow issuing from said gap onto said suction surface of the rear blade is such that the air flow flows along the suction surface of the rear blade, whereby separation of said boundary layer on the suction surface of the rear blade is restricted to the vicinity of the trailing edge of the rear blade.

Preferably, the ratio of the distance and the pitch of the tandem blades is less than or substantially equal to 0.3, said distance being the distance in the circumferential direction of the disc between the trailing edge of the front blade and leading edge of the rear blade of each tandem blade at the ends of said blades attached to the disc.

Preferably, the ratio is less than or substantially equal to 0.15.

Preferably, the ratio is substantially in the range 0.020 to 0.275.

Preferably, the ratio of the distance in the circumferential direction of the disc between the trailing edge of the front blade and the leading edge of the rear blade of each said tandem blade at positions along said leading and trailing edges spaced progressively radially outwardly from the ends of said blades that are attached to the disc to the distance in the circumferential direction of the disc between the trailing edge of the front blade and leading edge of the rear blades of each said tandem blade at the ends where the blades are attached to the disc is substantially in the range 1.0 to 2.4.

Preferably, the ratio specified in the last preceding paragraph is substantially in the range 1.0 to 1.1 in the range of said progressively radially outward positions between said ends of the blades attached to said disc and approximately the mid-point of said progressively radially outward positions.

In order that the invention may be well understood, embodiments thereof, which are given by way of example only, will now be described with reference to the drawings, in which:
Figure 1 is a schematic view showing an arrangement of tandem blades in a fan assembly;
Figure 2 illustrates air flow through the tandem blades of Figure 1;
Figure 3 represents graphically an example of the spacing between the trailing edge of the front blade and the leading edge of the rear blade of the tandem blades;
Figure 4 shows graphically the relationship between adiabatic efficiency and pressure ratio in a fan assembly according to the ratio of the pitch of the tandem blades and the spacing between the front and rear blades of the tandem blades;
Figure 5 is a partial side view showing an example of the fan assembly;
Figure 6 is a cross-sectional view corresponding to Figure 1 taken along the HUB line in Figure 5;
Figure 7 is a view corresponding to Figure 6 taken along the line MEAN in Figure 5;
Figure 8 is a view corresponding to Figure 1 taken along the line TIP in Figure 5;
Figure 9 is a schematic view showing a testing device used for a performance test of an embodiment of the fan assembly and a comparative example of a prior art fan assembly;
Figure 10 is a view showing a method for performing measurement using the testing device in Figure 9;
Figure 11 is a schematic view showing an advanced turboprop engine according to the prior art; and
Figure 12 is a typical view showing an air flow in a moving blade lattice according to the prior art.

A preferred embodiment of the fan assembly will be describedbelow with reference to the drawings. The present invention is not restricted to the described embodiment.

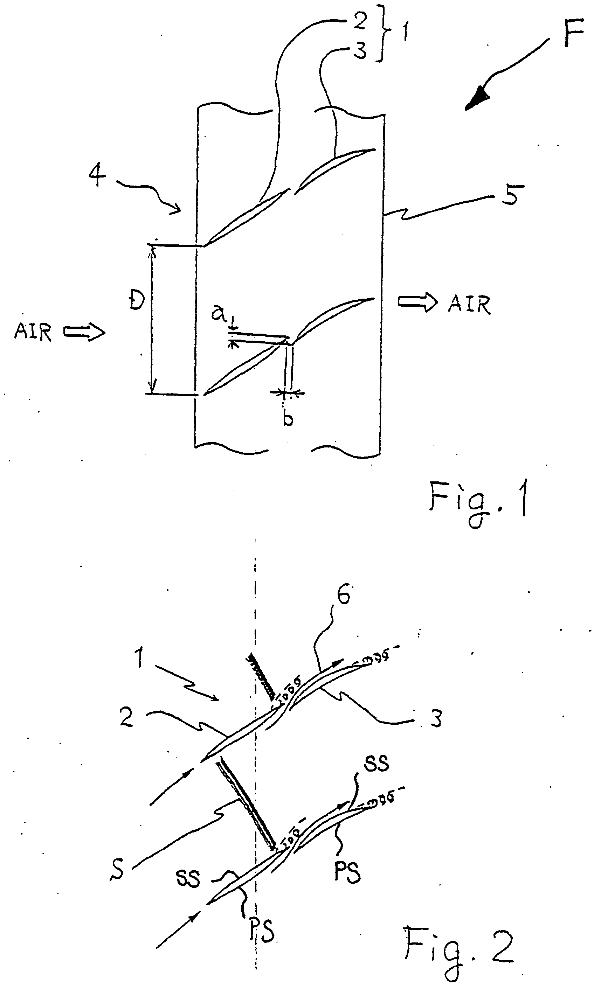

As shown in Fig.1, a tandem blade 1 is constructed with a front blade 2 and a rear blade 3. A fan assembly F comprises a plurality of tandem blades 1 arranged around the circumference of a disc 5. In the description that follows, the tandem blades arranged around the disc will be referred to as a tanden lattice 4.

In the present embodiment, shapes of the front and rear blades 2 and 3 of the tandem blade 1, a positional relationship between the front and rear blades 2 and 3 (gaps "a" and "b", and the like), a blade lattice pitch D of the tandem blade lattice 4 shown in Fig. 1 and the like are set in the following manner by performing three-dimensional calculation fluid dynamics using a computer.

As shown in Fig. 2, a shock wave S is typically formed in the vicinity of a line extending between the leading edge of a lower surface (pressure surface "PS") of one of the adjacent front blades 2 and the trailing edge of an upper surface (suction surface "SS") of the other front blade 2. This formation is performed by setting a proper shape of the front blade 2 by a MCA (multi-circle airfoil) designing method. More specifically, the shock wave S is generated in the vicinity of the leading edge of the lower surface of the front blade 2 and arrives at the vicinity of the trailing edge of the upper surface of the other front blade 2 depending on the proper shape thereof.

By regulating the speed and momentum of an air flow, or jet 6 issuing from a gap between the trailing edge of the lower surface of the front blade 2 and the leading edge of the upper surface of the rear blade 3 onto the upper surface of the rear blade 3, the air jet 6 is caused to flow along the upper surface of the rear blade 3 so that a boundary layer of the upper surface of the rear blade 3 can be maintained. In other words, separation of the boundary layer on the upper surface of the rear blade 3 is restricted to the vicinity of the trailing edge. Consequently, the boundary layer can also be maintain in the vicinity of the circumferential surface, or hub section, of the disc where separation is easily caused. This is achieved mainly by setting a suitable gap between the trailing edge of the lower surface of the front blade 2 and the leading edge of the upper surface of the rear blade 3 and suitably shaping the rear blade 3.

While the shock wave can be generated in the vicinity of the trailing edge of the upper surface of the front blade only by using the tandem blade lattice, it can be generated closer to the trailing edge by the above-mentioned dynamics.

By shifting the inevitable generation of the shock wave S in a high pressure ratio blade lattice toward a rear portion of the upper surface of the front blade 2 as much as possible, the separation of the boundary layer from a blade surface caused by interference between the shock wave S and the boundary layer can be inhibited. In addition, the air flow from the gap to the upper surface of the rear blade 3 can be regulated so that the boundary layer on the upper surface of the rear blade 3 can be maintained. Thus, the boundary layer of the rear blade 3 can be controlled by the front blade 2. In this case, any program for three-dimensionally analyzing a flow around the blade lattice and a distribution of the shock wave S can be used, and an application program thereof is not restricted.

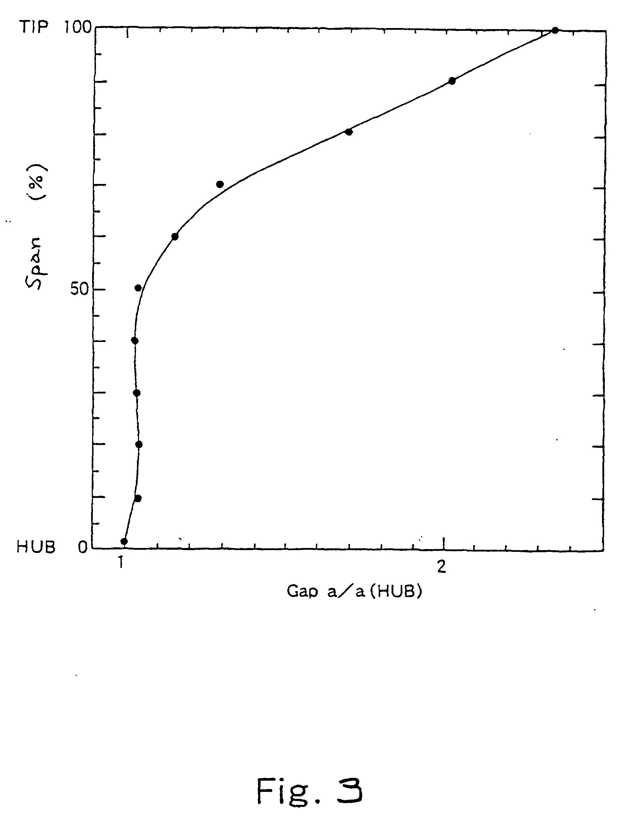

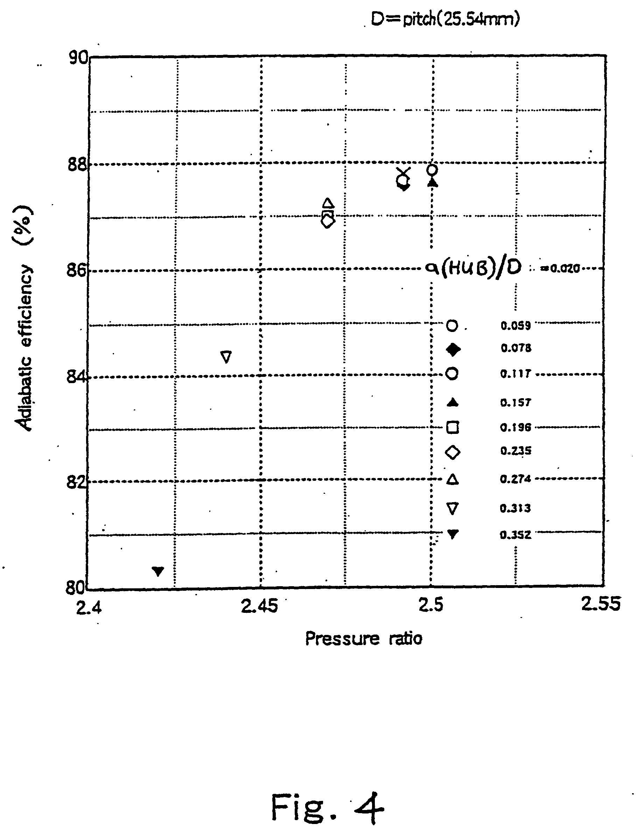

Figs. 3 and 4 show examples of a gap between the trailing edge of the lower surface of the front blade 2 and the leading edge of the upper surface of the rear blade 3 suitable for maintaining the boundary layer on the upper surface of the rear blade 3 obtained by the three-dimensional calculation fluid dynamics.

Fig. 3 shows graphically an example of the gap "a" between the front and rear blades of the tandem blade 1 from the hub end to the tip end of the blades in a tandem blade lattice 4 having a certain blade lattice pitch D. In Fig. 3, the gap "a" is represented by dimensionless numerals by using a ratio of a / a (HUB) of the gap "a" in each portion of the blade to the gap "a" (HUB) between the front and rear blades at the hub surface (see Fig. 1).

Fig. 4 shows the adiabatic efficiency and pressure ratio of tandem blade lattices 4 having different ratios of the gap "a" to the blade lattice pitch D.

In Fig. 4, dimensionless numerals are represented by using a ratio a (HUB)/D of the gap "a" (HUB) between the front and rear blades on the HUB surface to the gap D (the blade lattice pitch) between the adjacent tandem blades 1 of each tandem blade lattice 4. As is apparent from Fig. 4, if the tandem blade lattice 4 has the ratio a (HUB)/D which is less than about 0.3, a high efficiency can be obtained with a high pressure ratio. If the tandem blade lattice 4 has the ratio a (HUB)/D which is equal to or less than about 0.15, a much higher efficiency can be obtained with a higher pressure ratio.

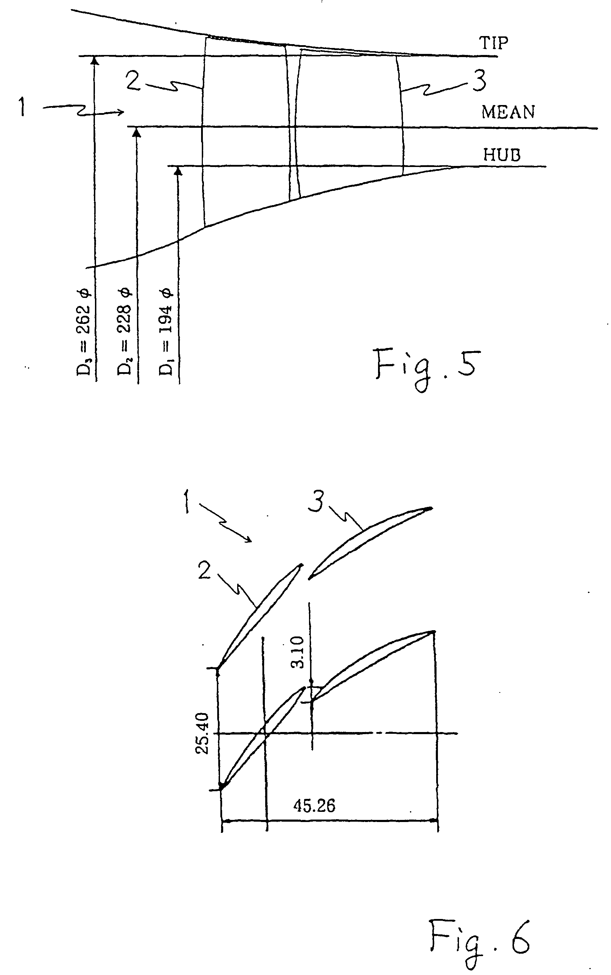

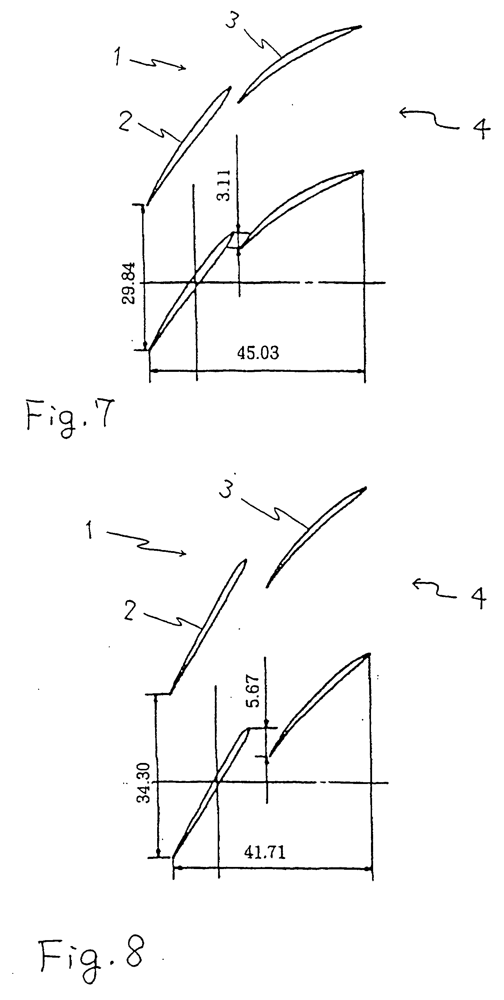

Figs. 5 to 8 show specific examples of positional relationships between the front and rear blades 2 and 3 of the tandem blade 1 and between the tandem blades 1 which are obtained by the above-mentioned method. A dimensional relationship between the front and rear blades 2 and 3 is set as shown. Fig. 6 is a cylindrically sectional view taken along the line HUB shown in Fig. 5, Fig. 7 is a cylindrically sectional view taken along the line MEAN shown in Fig. 5, and Fig. 8 is a cylindrically sectional view taken along the line TIP shown in Fig. 5. A mutual relationship between the front blade 2 and the rear blade 3 is changed from a state in which the front blade 2 and the rear blade 3 are laid down together from the HUB section to the TIP section (that is, an inclination of the HUB to an axis is small) to a state in which they rise together (that is, the inclination of the HUB to the axis is great) so that the gap between the front and rear blades 2 and 3 is gradually increased from the HUB section to the TIP section. In other words, if the front and rear blades 2 and 3 are twisted together in the same direction, the gradual increase can be obtained.

The results of testing an embodiment of the fan assembly will now be described.

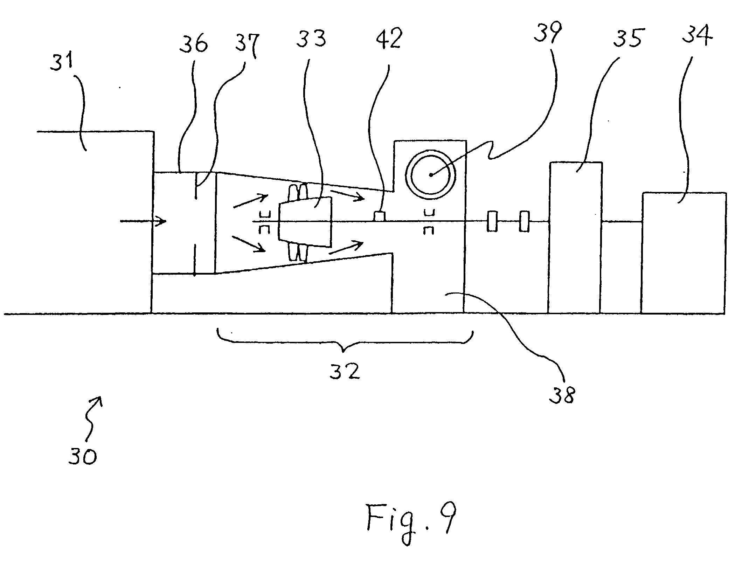

A trailing edge shock wave type boundary layer control tandem blade lattice (embodiment) shown in Table 1 was fabricated with the blades shaped and positioned as shown in Figs. 5 to 8. The performance of the embodiment was measured by a testing device 30 shown in Fig. 9.

A blade lattice (comparative example) according to the prior art as specified in Table 2 was fabricated with the same blade length as the embodiment, and performance thereof was measured by the same testing device 30.

In the testing device 30 shown in Fig. 9, an air flow rectified by a rectifying tank 31 is fed to a specimen 33 provided on a specimen section 32. The specimen 33 is rotated through a speed increasing gear 35 by a drive motor 34 provided on a downstream portion of the air flow. An orifice 37 for measuring an air weight flow is provided on an upstream portion of an inlet duct 36 portion. The reference numeral 38 denotes an exhaust scroll section, and the reference numeral 39 denotes an exhaust port.

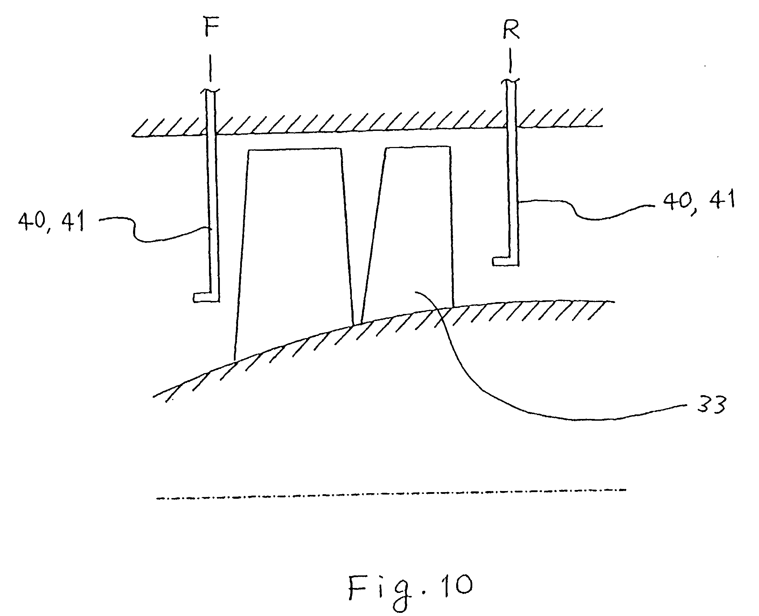

As typically shown in Fig. 10, measurement was performed by disposing a total pressure measuring probe 40 and a total temperature measuring probe 41 in front and rear portions of the blade(points F and R in Fig. 10) respectively, and radially traversing the probes every millimeter between TIP and HUB sections. An air flow rate was measured by an orifice 37 provided in the upstream of an inlet duct section. The number of revolutions of the blade lattice was measured by a revolution measuring pick-up 42(See Fig.9) provided on a rotation shaft of a disk to which the blade lattice is attached.

Each data obtained by the measurement was processed in the following manner.
(1) Each of average measured values of a total pressure and a total temperature between the TIP and HUB sections on the points F and R is calculated.
(2) A pressure ratio is calculated based on a ratio P_{R}/P_{F} of an average value P_{R} of the total pressure on the point R to an average value P_{F} of the total pressure on the point F.
(3) An average value T_{R} of the total temperature on the point R and an average value of TF the total temperature on the point F are also calculated, and the average value P_{R} of the total pressure on the point R and the average value P_{F} of the total pressure on the point F which have been calculated are also used to obtain an adiabatic efficiency by the following equation.$\text{(Equation 1)} {\text{η = T}}_{\text{F}} {\text{{ (P}}_{\text{R}} {\text{/ P}}_{\text{F}} {\text{)}}^{\text{(k-1)/k}} {\text{-1} / (T}}_{\text{R}} {\text{-T}}_{\text{F}} \text{)}$
η: Adiabatic efficiency
k: Adiabatic exponent

Table 1 shows a result of measurement in the embodiment, and the pressure ratio and the adiabatic efficiency thus calculated together with principal items of the embodiment. Table 2 shows a result of measurement, the pressure ratio and the adiabatic efficiency in the comparative example.

**Table 1**

| | Principal Item | Measured Value |
|---|---|---|
| | Front blade 24 | --- |
| Number of blades | Rear blade 24 | --- |
| Diameter of blade tip (mm) | 265 | --- |
| Number of revolutions (rpm) | 29134 | 29134 |
| Flow rate (kg/s) | --- | 5.5 |
| Pressure ratio | --- | 2.7 |
| Adiabatic efficiency (%) | --- | 87 |

**Table 2**

| | Principal Item | Measured Value |
|---|---|---|
| Number of blades | 24 | --- |
| Diameter of blade tip (mm) | 265 | --- |
| Number of revolutions (rpm) | 29134 | 29134 |
| Flow rate (kg/s) | --- | 5.5 |
| Pressure ratio | --- | 1.8 |
| Adiabatic efficiency (%) | --- | 87 |

It is apparent from a comparison between Table 1 and Table 2 that a high pressure ratio of 2.7 which is about 1.5 times as high as that of the comparative example can be obtained in the embodiment while keeping the same efficiency as in the comparative example.

As described above in detail, when the tandem blade lattice of the fan assembly F is applied to a compressor or the like, performance thereof, as compared with a prior art tandem blade lattice, can be enhanced remarkably.

The structure of the fan assembly of the embodiments is such that in use a shock wave extending between the leading and trailing edges of adjacent front blades is generated between the blade lattices as shown in Figure 2. In addition, separation of the boundary layer on the rear blade can be prevented by controlling the boundary layer of the front blade. Consequently, the pressure ratio for each single stage of the tandem blade lattice can be increased while keeping a high adiabatic efficiency. For example, the pressure ratio for each single stage can be set to about 2.4 with an adiabatic efficiency of about 87%.

Although the present invention has fully been described by way of example with reference to the accompanying drawings, it is to be understood that various changes and modifications will be apparent to those skilled in the art. Therefore, unless such changes and modifications depart from the scope of the claims, they should be construed as being included therein.

## Claims

1. A fan assembly for an output section of a jet propulsion engine or gas turbine, said fan assembly comprising a disc (5) and a plurality of tandem blades (1) arranged around the circumference of the disc, each said tandem blade comprising a front blade (2) and a rear blade (3) and **characterised in that** the front blades of said tandem blades are shaped and positioned such that, in use, a shockwave (S) is generated along a line extending between the leading edge region of the pressure surface (PS) of each front blade and the trailing edge region of the facing suction surface (SS) of an adjacent front blade and **in that** the front blade (2) and rear blade (3) of each said tandem blade (1) are shaped and positioned such that, in use, an air flow issuing from a gap defined between the trailing edge of the front blade and the leading edge of the rear blade flows onto the suction surface (SS) of the rear blade such as to maintain a boundary layer on the suction surface of the rear blade.

2. An assembly as claimed in claim 1, wherein the front blade (2) and rear blade (3) of each tandem blade (1) are shaped and positioned such that, in use, the speed and momentum of said air flow issuing from said gap onto said suction surface (SS) of the rear blade is such that the air flow flows along the suction surface of the rear blade, whereby separation of said boundary layer on the suction surface of the rear blade is restricted to the vicinity of the trailing edge of the rear blade.

3. An assembly as claimed in claim 1 or 2, wherein the ratio of the distance (a) and the pitch (D) of the tandem blades is less than or substantially equal to 0.3, said distance (a) being the distance in the circumferential direction of the disc between the trailing edge of the front blade (2) and leading edge of the rear blade (3) of each tandem blade (1) at the ends of said blades attached to the disc.

4. An assembly as claimed in claim 3, wherein said ratio is less than or substantially equal to 0.15.

5. An assembly as claimed in claim 3, wherein said ratio is substantially in the range 0.020 to 0.275.

6. An assembly as claimed in any one of the preceding claims, wherein the ratio of the distance (a), which is the distance in the circumferential direction of the disc (5) between the trailing edge of the front blade (2) and leading edge of the rear blade (3) of each said tandem blade (1) at positions along said leading and trailing edges spaced progressivity radially outwardly from the ends of said blades attached to said disc, to the distance (a) at said ends is subtantially in the range 1.0 to 2.4.

7. An assembly as claimed in claim 6, wherein said ratio is substantially in the range 1.0 to 1.1 in the range of said progressivity radially outward positions between said ends of the blades attached to said disc and approximately the mid-point of said progressively radially outward positions.

## Patentansprüche

1. Gebläsebaugruppe für einen Austrittsabschnitt eines Strahltriebwerkes oder einer Gasturbine, wobei die Gebläsebaugruppe eine Scheibe (5) und mehrere Tandemschaufeln (1), die entlang dem Umfang der Scheibe angeordnet sind, umfasst, wobei jede Tandemschaufel eine vordere Schaufel (2) und eine hintere Schaufel (3) umfasst, **dadurch gekennzeichnet, dass** die vorderen Schaufeln der Tandemschaufeln so geformt und positioniert sind, dass im Betrieb eine Stoßwelle (S) entlang einer Linie, die sich zwischen der Vorderkantenregion der Druckseite (PS) jeder vorderen Schaufel und der Hinterkantenregion der gegenüberliegenden Ansaugseite (SS) einer benachbarten vorderen Schaufel erstreckt, erzeugt wird, und dass die vordere Schaufel (2) und die hintere Schaufel (3) jeder Tandemschaufel (1) so geformt und positioniert sind, dass im Betrieb ein Luftstrom, der von einem Spalt, welcher zwischen der Hinterkante der vorderen Schaufel und der Vorderkante der hinteren Schaufel definiert wird, ausgeht, so auf die Ansaugseite (SS) der hinteren Schaufel strömt, dass auf der Ansaugseite der hinteren Schaufel eine Grenzschicht aufrecht erhalten wird.

2. Baugruppe nach Anspruch 1, wobei die vordere Schaufel (2) und die hintere Schaufel (3) jeder Tandemschaufel (1) so geformt und positioniert sind, dass im Betrieb der von dem Spalt ausgehende Luftstrom auf die Ansaugseite (SS) der hinteren Schaufel eine solche Geschwindigkeit und ein solches Moment aufweist, dass der Luftstrom an der Ansaugseite der hinteren Schaufel entlang strömt, wodurch die Abtrennung der Grenzschicht auf der Ansaugseite der hinteren Schaufel auf die unmittelbare Umgebung der Hinterkante der hinteren Schaufel beschränkt ist.

3. Baugruppe nach Anspruch 1 oder 2, wobei das Verhältnis zwischen dem Abstand (a) und der Steigung (D) der Tandemschaufeln weniger als - oder im Wesentlichen gleich - 0,3 ist, wobei der Abstand (a) der Abstand in Umfangsrichtung der Scheibe zwischen der Hinterkante der vorderen Schaufel (2) und der Vorderkante der hinteren Schaufel (3) jeder Tandemschaufel an den Enden der an der Scheibe befestigten Schaufeln ist.

4. Baugruppe nach Anspruch 3, wobei das Verhältnis weniger als - oder im Wesentlichen gleich - 0,15 ist.

5. Baugruppe nach Anspruch 3, wobei das Verhältnis im Wesentlichen im Bereich von 0,020 bis 0,275 liegt.

6. Baugruppe nach einem der vorangehenden Ansprüche, wobei das Verhältnis zwischen dem Abstand (a), welcher der Abstand in Umfangsrichtung der Scheibe (5) zwischen der Hinterkante der vorderen Schaufel (2) und der Vorderkante der hinteren Schaufel (3) jeder Tandemschaufel (1) an Positionen entlang der Vorder- und der Hinterkante, die progressiv radial auswärts von den Enden der an der Scheibe befestigten Schaufeln beabstandet sind, und dem Abstand (a) an den Enden im Wesentlichen im Bereich von 1,0 bis 2,4 liegt.

7. Baugruppe nach Anspruch 6, wobei das Verhältnis im Bereich der progressiv radial auswärts befindlichen Positionen zwischen den Enden der an der Scheibe befestigten Schaufeln und etwa dem Mittelpunkt der progressiv radial auswärts befindlichen Positionen im Wesentlichen im Bereich von 1,0 bis 1,1 liegt.

## Revendications

1. Ensemble de ventilateur pour une section de sortie d'un moteur de propulsion à réaction ou d'une turbine à gaz, ledit ensemble de ventilateur comprenant un disque (5) et une pluralité d'aubes en tandem (1) disposées autour de la circonférence du disque, chaque dite aube en tandem comprenant une aube avant (2) et une aube arrière (3), et **caractérisé en ce que** les aubes avant desdites aubes en tandem sont formées et positionnées de telle sorte que pendant leur utilisation, une onde de choc (S) est générée le long d'une ligne s'étendant entre la zone du bord d'attaque de l'intrados (PS) de chaque aube avant et la zone du bord de fuite de l'extrados (SS) lui faisant face d'une aube avant adjacente, et **en ce que**
l'aube avant (2) et l'aube arrière (3) de chaque dite aube en tandem (1) sont formées et positionnées de telle sorte que pendant leur utilisation, un flux d'air provenant d'un orifice défini entre le bord de fuite de l'aube avant et le bord d'attaque de l'aube arrière s'écoule sur l'extrados (SS) de l'aube arrière de façon à maintenir une couche limite sur l'extrados de l'aube arrière.

2. Ensemble selon la revendication 1, dans lequel l'aube avant (2) et l'aube arrière (3) de chaque aube en tandem (1) sont formées et positionnées de telle sorte que pendant leur utilisation, la vitesse et la force d'impulsion dudit flux d'air provenant dudit orifice pour venir sur ledit extrados (SS) de l'aube arrière sont telles que le flux d'air s'écoule le long de l'extrados de l'aube arrière, moyennant quoi la séparation de ladite couche limite sur l'extrados de l'aube arrière est réduite à proximité du bord de fuite de l'aube arrière.

3. Ensemble selon la revendication 1 ou 2, dans lequel le rapport entre la distance (a) et le pas (D) des aubes en tandem est inférieur ou substantiellement égal à 0,3, ladite distance (a) étant la distance dans le sens de la circonférence du disque entre le bord de fuite de l'aube avant (2) et le bord d'attaque de l'aube arrière (3) de chaque aube en tandem (1) aux extrémités desdites aubes reliées au disque.

4. Ensemble selon la revendication 3, dans lequel ledit rapport est inférieur ou substantiellement égal à 0,15.

5. Ensemble selon la revendication 3, dans lequel ledit rapport se situe substantiellement dans une plage de 0,020 à 0,275.

6. Ensemble selon l'une quelconque des revendications précédentes, dans lequel le rapport entre la distance (a), qui est la distance dans le sens de la circonférence du disque (5) entre le bord de fuite de l'aube avant (2) et le bord d'attaque de l'aube arrière (3) de chaque dite aube en tandem (1) à des emplacements le long desdits bords d'attaque et de fuite distants progressivement et radialement vers l'extérieur depuis les extrémités desdites aubes reliées au dit disque, et la distance (a) au niveau desdites extrémités se situe substantiellement dans la plage de 1,0 à 2,4.

7. Ensemble selon la revendication 6, dans lequel ledit rapport se situe substantiellement dans la plage de 1,0 à 1,1 dans la plage desdits emplacements progressivement et radialement extérieurs entre lesdites extrémités des aubes reliées au dit disque et approximativement le point central desdits emplacements progressivement et radialement extérieurs.
